# EUROPÄISCHE PATENTSCHRIFT

(11) **EP 3 821 212 B1**
(45) Veröffentlichungstag und Bekanntmachung des Hinweises auf die Patenterteilung: **14.12.2022**
(21) Anmeldenummer: 19736352.6
(22) Anmeldetag: 02.07.2019
(51) Int. Cl.: G01F 23/284, G01S 13/88, H01Q 1/22, G01S 7/02, G01S 7/03, H01Q 9/04

(54) **FÜLLSTANDRADARANTENNENANORDNUNG ZUR MESSUNG EINES FÜLLSTANDES IN EINEM BEHÄLTER**
RADAR LEVEL SENSOR ASSEMBLY FOR MEASURING A LEVEL OF A MEDIUM IN A CONTAINER
ENSEMBLE CAPTEUR DE NIVEAU AU RADAR PERMETTANT DE MESURER UN NIVEAU D'UN MILIEU DANS UN RÉCIPIENT

(30) Priorität: 10.07.2018 DE 102018211422
(43) Veröffentlichungstag der Anmeldung: 19.05.2021
(73) Patentinhaber: VEGA Grieshaber KG, 77709 Wolfach (DE)
(72) Erfinder: BAUR, Roland, 78126 Königsfeld (DE)
(74) Vertreter: Maiwald GmbH
(86) Internationale Anmeldenummer: PCT/EP2019/067699
(87) Internationale Veröffentlichungsnummer: WO 2020/011596

(56) Entgegenhaltungen:
- EP-A1- 1 783 517
- EP-A1- 2 060 883
- EP-A1- 3 264 073
- EP-A1- 3 309 899
- EP-A2- 0 957 371
- WO-A1-2009/148397
- WO-A2-01/38902
- DE-A1-102006 019 688
- DE-A1-102008 050 329
- DE-A1-102016 217 614
- US-A1- 2010 066 594

## Beschreibung

Die vorliegende Anmeldung beansprucht die Priorität der deutschen Patentanmeldung Nr. 10 2018 211 422.6, eingereicht am 10. Juli 2018.

### Technisches Gebiet

Die vorliegende Erfindung betrifft eine Füllstandradarantennenanordnung zur Messung eines Füllstandes in einem Behälter, ein Füllstandradargerät mit einer solchen Füllstandradarantennenanordnung und einen Behälter mit einem solchen Füllstandradargerät.

### Hintergrund der Erfindung

Radarsensoren sind zur Messung des Füllstandes in einem Behälter, in welchen ein Füllgut gespeichert ist, aus dem Stand der Technik bekannt. Dabei sind die Antennen für Senden und Empfangen separat angeordnet, wodurch die Leistungsfähigkeit eines Radarsensors deutlich erhöht werden kann.

EP 3 165 883 A9 offenbart einen Füllstandradarsensor zur außenseitigen Anbringung an einer geschlossenen Decke eines Behälters, mit einer Abschirmung zum Abschirmen von Signalteilen des Sendesignals, welche an der Decke des Behälters reflektiert wurden, sodass ein Empfang dieser Signalanteile von der Empfangsantennenanordnung verhindert wird. WO 2009/148397 A1 offenbart ein Radarfüllstandsmesssystem zum Bestimmen eines Füllstands eines in einem Tank enthaltenen Produkts. Das System umfasst einen Transceiver zum Erzeugen, Senden und Empfangen von frequenzmodulierten elektromagnetischen Signalen, eine Sendeausbreitungsvorrichtung und eine Empfangsausbreitungsvorrichtung.

EP 2 060 883 A1 offenbart einen Füllstandsensor, welcher eine erste Antenne zum Senden eines Sendesignals zu einer Füllgutoberfläche, eine zweite Antenne zum Empfangen eines von der Füllgutoberfläche reflektierten Empfangssignals und eine gemeinsame Außenhülle für die erste und die zweite Antenne aufweist.

### Zusammenfassung der Erfindung

Es ist eine Aufgabe der vorliegenden Erfindung, die Messung eines Füllstandes in einem Behälter durch die Radarsensoren zu verbessern und dabei einen Platzbedarf für eine Füllstandmessvorrichtung möglichst gering zu halten.

Diese Aufgabe wird durch eine Füllstandradarantennenanordnung zur Messung eines Füllstandes in einem Behälter, ein Füllstandradargerät mit einer solchen Füllstandradarantennenanordnung und einen Behälter mit einem solchen Füllstandradargerät gelöst. Vorteilhafte Ausführungsformen und Weiterbildungen sind den Unteransprüchen und der nachfolgenden Beschreibung zu entnehmen.

Die Füllstandradarantennenanordnung zur Messung eines Füllstandes in einem Behälter weist eine Sendeantennenanordnung, eine Empfangsantennenanordnung und ein Gehäuse auf. Die Sendeantennenanordnung ist zum Senden eines Sendesignals in Richtung einer Füllgutoberfläche eines in dem Behälter gespeicherten Füllgutes eingerichtet und die Empfangsantennenanordnung ist zum Empfangen eines an der Füllgutoberfläche reflektierten Sendesignals eingerichtet. Die Sende- und die Empfangsantennenanordnungen sind in dem Gehäuse angeordnet, wobei die Sendeantennenanordnung größer als die Empfangsantennenanordnung ist.

Ein Behälter, dessen Füllstand bestimmt werden soll, kann mit einem Füllgut gefüllt sein. Das Füllgut kann ein flüssiges Medium, wie beispielsweise Wasser oder Chemikalien oder ein Festkörper, wie beispielsweise Sand, Granulat oder ähnliches sein. Die Füllstandradarantennenanordnung kann an einer äußeren Seite des Behälters, vorzugsweise an einer Behälterdecke angebracht werden. Die Behälterdecke kann hierbei derjenige Teil des Behälters sein, der zu dem Füllgut entgegengesetzt angeordnet ist, sich also beim ordnungsgemäßen Betrieb im oberen Bereich des Behälters befindet. Der Behälter kann ein Fenster aufweisen, wodurch die Füllstandradarantennenanordnung den Füllstand messen kann. Alternativ kann vorgesehen sein, dass die Füllstandmessung mittels der Füllstandradarantennenanordnung durch eine Wandung des Behälters erfolgt, sofern dieser nicht aus Metall ist.

Die Füllstandradarantennenanordnung kann an einer füllgutzugewandten Seite der Behälterseite oder des Behälterdeckels angeordnet sein. Somit ist es nicht notwendig den Behälter zu öffnen, um den Füllstand des Füllguts zu messen.

Im Gehäuse der Füllstandradarantennenanordnung können die Sendeantennenanordnung und die Empfangsantennenanordnung voneinander getrennt angeordnet sein. Beispielsweise können sie nebeneinander und/oder versetzt zueinander angeordnet sein. Vorzugsweise können die Sendeantennenanordnung und Empfangsantennenanordnung in einem Gehäuse nebeneinander angeordnet werden, was zu einer Platzeinsparung der Füllstandradarantennenanordnung führt. Außerdem ermöglicht diese Anordnung, dass die Sende- und die Empfangsantennenanordnung automatisch eine richtige Ausrichtung zueinander haben, somit keine Justage der Sendeantennenanordnung und Empfangsantennenanordnung gegeneinander nötig ist.

Zum Senden eines Sendesignals kann ein Sendesignal von der Sendeantennenanordnung in Richtung der Füllgutoberfläche durch ein Fenster an der Behälterdecke oder auch durch das Kunststoffgehäuse des Behälters abgestrahlt werden. Ein an der Füllgutoberfläche reflektierter Sendesignalanteil kann von der Empfangsantennenanordnung detektiert werden. Die Sendeantennenanordnung und die Empfangsantennenanordnung sind in unterschiedlichen Größen ausgeführt. Dabei benötigt die Sendeantennenanordnung eine Mindestgröße, um ausreichend gute Abstrahleigenschaften aufzuweisen, um z.B. eine gewünschte Fokussierung des Sendesignals in Richtung Füllgut oder die Einhaltung von Normen und Vorschriften zu erfüllen. Hingegen kann die Empfangsantennenanordnung deutlich kleiner sein, sodass sie gerade noch genügend Energie des reflektierten Signals empfängt, um dieses in gewünschter Qualität weiterverarbeiten und auswerten zu können. Auf diese Weise kann eine jeweilige Mindestgröße der Sendeantennenanordnung und Empfangsantennenanordnung ausgewählt werden, um die Füllstandradarantennenanordnung möglichst kompakt zu gestalten, was einen platzsparenden Aufbau der Füllstandradarantennenanordnung ermöglicht.

Die Sende- und die Empfangsantennenanordnungen können zusammen mit weiteren Komponenten wie z.B. einer Batterie, einem Display und einem Kommunikationsmittel in einem Gehäuse integriert sein. Das Gehäuse der Füllstandradarantennenanordnung kann beispielsweise aus Kunststoff, Glas oder Metall hergestellt werden. Das Gehäuse kann so eingerichtet sein, dass es auf der Oberfläche eines Behälters angebracht werden kann. Aus diesem Grund kann das Gehäuse beispielsweise kubisch, zylindrisch, kegelförmig oder halbkugelförmig sein.

Ein besonderer Vorteil der vorliegenden Erfindung besteht darin, dass die Füllstandradarantennenanordnung durch den Einsatz der Sendeantennenanordnung und Empfangsantennenanordnung mit einer Mindestgröße, die Sende- und Empfangsanforderungen erfüllt, kompakt aufgebaut werden kann. Durch den Einsatz eines Radarsensors kann die Füllstandradarantennenanordnung zur Messung des Füllstandes leicht auf der Außenseite eines Behälters befestigt werden, ohne den Behälter öffnen zu müssen. Dabei sollte der Behälter aus für Radarstrahlen durchlässigem Material bestehen.

Ferner ist es möglich, störende Auswirkungen bei der Messung durch die Behälterdecke zu verringern oder sogar ganz zu eliminieren. Für den Anwender ergeben sich durch einen Einsatz der getrennten Sende- und Empfangsantennenanordnung zahlreiche Vorteile, beispielsweise eine einfachere Inbetriebnahme des Sensors, keine umständliche, elektronische Störsignalausblendung, eine Verringerung des Totbereiches des Sensors oder eine Vergrößerung des Messbereichs (Nutzbereich). Des Weiteren ist es möglich, dass das "Klingeln" durch die Trennung der Sende- und Empfangsantennenanordnung deutlich reduziert wird, was besonders im Nahbereich erhebliche Vorteile bringt, da dort das Echosignal nicht oder zumindest weniger ausgeprägt durch das Klingeln überlagert wird.

Insbesondere bei IBC-Containern (IBC: Intermediate Bulk Container) ist eine genaue Messung im Nahbereich von Vorteil, wenn der Behälter nahezu voll ist.

In einer Ausführungsform weisen die Sendeantennenanordnung oder die Empfangsantennenanordnung einen Aperturstrahler auf. Aperturstrahler oder Hornstrahler sind Antennen, die über eine strahlende Öffnung (Apertur) elektromagnetische Energie abstrahlen oder aufnehmen. Aperturstrahler bzw. Hornstrahler gehören zu Flächenantennen, die eine von einem Hohlleiter geleitete Welle an einer Flächenausdehnung, beispielsweise an einer Öffnung (Apertur) in einem Hohlleitersystem, in Freiraumwellen umwandeln und umgekehrt. Dadurch bleibt die Feldverteilung der eingespeisten Welle weitgehend erhalten und der Übergang in den Freiraum ist nahezu reflexionsfrei. Aus diesen Gründen ist der Radarsensor in Gegenrichtung des Füllguts angeordnet und der Hohlleiter sowie die Apertur sind in Richtung Füllgut angeordnet.

In einer Ausführungsform ist eine Apertur der Sendeantennenanordnung größer als eine Apertur der Empfangsantennenanordnung.

In einer Ausführungsform ist eine Wirkfläche der Apertur der Sendeantennenanordnung mehr als doppelt so groß wie eine Wirkfläche der Apertur der Empfangsantennenanordnung.

Zur Erfüllung der Abstrahlungsanforderungen kann die Sendeantennenanordnung eine Mindestgröße bzw. Mindestfläche der Apertur aufweisen, welche zur Fokussierung des Sendesignals in einen Freiraum erforderlich ist. Zum Erreichen einer ausreichenden Signalqualität kann es vorteilhaft sein, wenn die Empfangsantennenanordnung eine Mindestgröße bzw. Mindestfläche der Apertur aufweist, um ein Empfangssignal zu fokussieren. Somit kann die Apertur bzw. Wirkfläche der Sendeantennenanordnung größer als die Apertur bzw. Wirkfläche der Empfangsantennenanordnung, vorzugsweise mehr als doppelt so groß wie die Apertur der Empfangsantennenanordnung eingerichtet sein. Hierbei kann die Apertur in unterschiedlicher Form ausgeführt sein, z.B. rund, elliptisch oder rechteckig, und die Größe der Apertur mittels eines Durchmessers oder einer Diagonallänge der jeweiligen Apertur bestimmt werden.

In einer Ausführungsform ist die Summe der Aperturflächen von Sendeantennenanordnung und Empfangsantennenanordnung größer als 50% und vorzugsweise größer als 90% einer Fläche des Gehäuses, an der die Aperturen der Sendeantennenanordnung und Empfangsantennenanordnung angeordnet sind.

Das Gehäuse kann möglichst kompakt ausgeführt sein. Dabei können die Sendeantennenanordnung und Empfangsantennenanordnung eng beieinander angeordnet werden. Zusätzlich können die Aperturen der Sendeantennenanordnung und Empfangsantennenanordnung größtenteils die Fläche einnehmen, an der die Aperturen der Sendeantennenanordnung und Empfangsantennenanordnung angeordnet sind. Auf diese Weise kann die Summe der Aperturflächen von Sendeantennenanordnung und Empfangsantennenanordnung mindestens 50% vorzugsweise 90% der Fläche des Gehäuses betragen, an der die Aperturen der Sendeantennenanordnung und der Empfangsantennenanordnung angeordnet sind.

In einer Ausführungsform weist die Sendeantennenanordnung eine Hornantenne auf. In einer Ausführungsform weist die Empfangsantennenanordnung eine Hornantenne auf. Aperturstrahler oder Hornstrahler sind Antennen, die über eine strahlende Öffnung (Apertur) elektromagnetische Energie abstrahlen oder aufnehmen. Eine Hornantenne oder ein Hornstrahler ist eine Antenne für Mikrowellen aus einem an die Form eines Exponentialtrichters oder eines Hohlkegels angenäherten Metallkörper, also einer Exponentialleitung, die häufig über einen Hohlleiter gespeist wird. Aperturstrahler haben meistens die Form eines Hohlleiters, der sich allmählich zum Horn aufweitet. Je größer geometrische Abmessungen der Wirkfläche des Hornstrahlers im Vergleich zur Wellenlänge ausfallen, desto stärker wird die abgestrahlte Leistung gebündelt, wodurch sich ein hoher Richtfaktor ergibt. Aus diesem Grund können die Sende- und/oder die Empfangsantennenanordnung eine Hornantenne umfassen. Dabei kann die Hornantenne verschiedene Hornstrahlerformen wie z.B. eine Pyramide, eine konisch oder eine exponentielle Form aufweisen.

In einer Ausführungsform weist die Hornantenne eine Linse auf. Auf die Apertur der Hornantenne kann eine Linse aufgebracht werden, welche zur weiteren Fokussierung des Sende- oder Empfangssignals dienen kann.

Die vorliegende Erfindung umfasst weiterhin ein Füllstandradargerät, welches eine Füllstandradarantennenanordnung wie oben beschrieben aufweist. Das Füllstandradargerät kann weiterhin eine Batterie zum Betreiben des Füllstandradargeräts, ein Display zum Darstellen beispielsweise des Füllstandes in einem Behälter, in dem ein Füllgut gespeichert ist, und/oder ein Kommunikationsmittel zum Übermitteln des Füllstandes beispielsweise via Bluetooth, WLAN, etc. umfassen. Die im Füllstandradargerät integrierten Füllstandradarantennenanordnung ermöglicht, dass das Füllstandradargerät auf einer äußeren Seite des Behälters, vorzugsweise auf einer äußeren Behälterdecke, befestigt werden kann. Auf diese Weise kann der Behälter trotz einer zuverlässigen Messung des Füllstandes verschlossen bleiben. Durch eine Nebeneinanderstellung der Sendeantennenanordnung und der Empfangsantennenanordnung in der Füllstandradarantennenanordnung kann das Füllstandradargerät kompakt aufgebaut werden, welches zur praktischen und leichten Handhabung des Füllstandradargeräts beiträgt.

Die vorliegende Erfindung umfasst weiterhin einen Behälter, welcher ein Füllstandradargerät wie oben beschrieben aufweist. Der Behälter kann aus Kunststoff, Glas oder Metall hergestellt werden. Der Behälter kann beispielsweise ein IBC-Container (IBC: Intermediate Bulk Container) oder ein GFK-Tank (GFK: Glasfaserverbund) sein, welcher ein Füllgut speichert und durch einen Deckel verschlossen ist. Die Behälterdecke kann vorzugsweise ein Fenster aus beispielsweise Kunststoff, Glas oder Keramik aufweisen, wodurch die Sende- und Empfangssignale aus der Füllstandradarantennenanordnung übertragen werden können.

In einer Ausführungsform ist das Material des Behälters dort, wo das Füllstandradargerät angebracht ist, identisch mit einem Material des Gehäuses der Füllstandradarantennenanordnung. Auf diese Weise kann ein Impedanzsprung der Sende- und Empfangssignale zwischen der Füllstandradarantennenanordnung und dem Behälter vermieden werden, was eine präzise Messung des Füllstandes im Behälter ermöglicht.

Weitere Vorteile und Anwendungsmöglichkeiten der vorliegenden Erfindung ergeben sich aus der nachfolgenden Beschreibung, den Ausführungsbeispielen und den Figuren. In den Figuren stehen gleiche Bezugszeichen für gleiche oder ähnliche Objekte.

### Kurze Beschreibung der Figuren

- Fig. 1: zeigt eine Füllstandradarantennenanordnung gemäß einer Ausführungsform der Erfindung.
- Fig. 2: zeigt eine Füllstandradarantennenanordnung gemäß einer weiteren Ausführungsform.
- Fig. 3: zeigt eine Füllstandradarantennenanordnung, welche nicht erfindungsgemäß ausgeführt ist.
- Fig. 4: zeigt eine Füllstandradarantennenanordnung, welche nicht erfindungsgemäß ausgeführt ist.

### Detaillierte Beschreibung von Ausführungsbeispielen

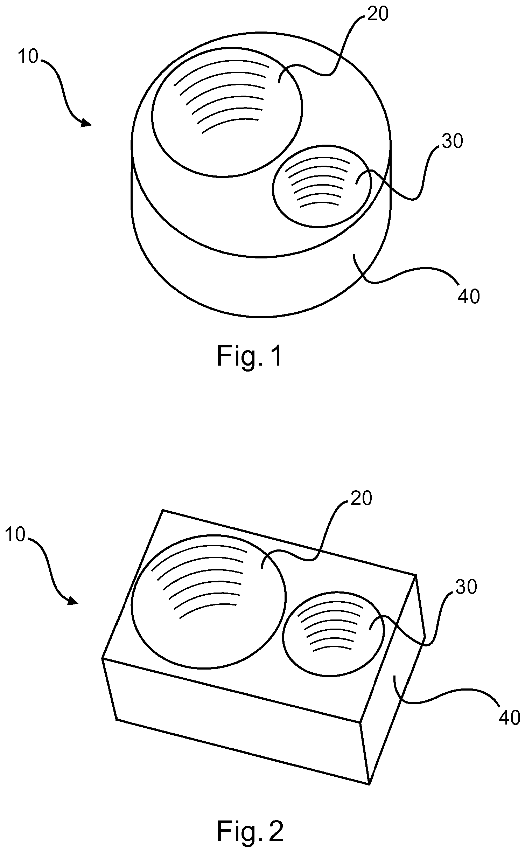

Figuren 1 und 2 zeigen eine Füllstandradarantennenanordnung 10 zur Messung eines Füllstandes in einem Behälter. Die Füllstandradarantennenanordnung 10 weist eine Sendeantennenanordnung 20 und eine Empfangsantennenanordnung 30 auf. Die Sendeantennenanordnung 20 sendet ein Sendesignal in Richtung einer Füllgutoberfläche eines in dem Behälter gespeicherten Füllgutes und die Empfangsantennenanordnung 30 empfängt ein an der Füllgutoberfläche reflektiertes Sendesignal. Die Sendeantennenanordnung 20 und die Empfangsantennenanordnung 30 sind in einem Gehäuse 40 nebeneinander angeordnet. Somit ist keine Justage der Sendeantennenanordnung und Empfangsantennenanordnung gegeneinander nötig. Das Gehäuse 40 kann quadratisch, kegelförmig, zylindrisch oder halbkugelförmig sein und beispielsweise aus dem gleichen Material wie der Behälter hergestellt werden. Die Sendeantennenanordnung 20 und die Empfangsantennenanordnung 30 weisen einen Aperturstrahler auf, wobei eine Apertur der Sendeantennenanordnung 20 größer als die Apertur der Empfangsantennenanordnung 30 ist. Beispielsweise kann ein Durchmesser der Apertur der Sendeantennenanordnung 20 mehr als doppelt so groß wie ein Durchmesser der Apertur der Empfangsantennenanordnung 30 sein. Insbesondere kann die Sendeantennenanordnung 20 eine Mindestgröße aufweisen, die Abstrahlanforderungen, z.B. eine Fokussierung des Sendesignals in Richtung Füllgut, erfüllt. Hingegen kann die Empfangsantennenanordnung 30 deutlich kleiner sein, sodass sie gerade noch genügend Energie des reflektierten Signals empfängt, um dieses in gewünschter Qualität weiterverarbeiten und auswerten zu können. Dennoch soll die Empfangsantennenanordnung 30 für das Empfangen des Signals ausreichend groß sein. Darüber hinaus, um das Gehäuse 40 und somit die Füllstandradarantennenanordnung 10 möglichst kompakt einzurichten, kann die Summe der Aperturflächen von Sendeantennenanordnung und Empfangsantennenanordnung größer als 50% und vorzugsweise größer als 90% einer Fläche des Gehäuses sein, an der die Aperturen der Sendeantennenanordnung und Empfangsantennenanordnung angeordnet sind. In Fig. 1 und Fig. 2 ist eine Hornantenne mit Linse für die Sendeantennenanordnung 20 und Empfangsantennenanordnung 30 eingesetzt. Optional können die Sende- und/oder Empfangsantennenanordnung eine Linse zur weiteren Fokussierung des Signals aufweisen.

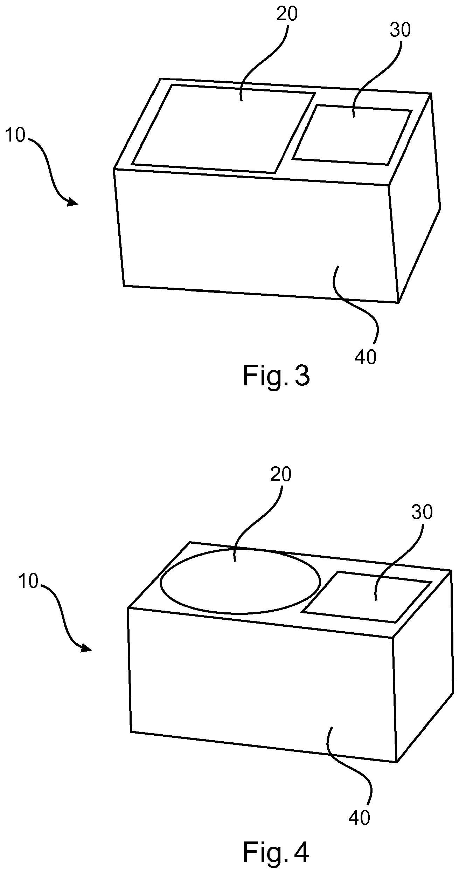

Figur 3 zeigt eine nicht erfindungsgemäße Füllstandradarantennenanordnung 10, wobei die Sende- und Empfangsantennenanordnung als Patchantennen ausgeführt sind. Die Patchantenne ermöglicht einen einfachen Aufbau der Füllstandradarantennenanordnung 10 und eine kostengünstigere Herstellung der Füllstandradarantennenanordnung 10. Auch beim Einsatz der Patchantenne kann die Sendeantennenanordnung 20 größer als die Empfangsantennenanordnung 30 sein. Insbesondere kann eine Antennenfläche der Sendeantennenanordnung 20 mehr als doppelt so groß wie die Antennenfläche der Empfangsantennenanordnung 30 sein, um das Sendesignal ausreichend zu fokussieren.

Figur 4 zeigt eine nicht erfindungsgemäße Füllstandradarantennenanordnung 10, wobei die Sendeantennenanordnung 20 eine Hornantenne ist und die Empfangsantennenanordnung 30 eine Patchantenne ist. Auch hierbei kann die Sendeantennenanordnung 20 eine Mindestgröße aufweisen, die größer als die Antennenfläche der Empfangsantennenanordnung 30 ist und die Abstrahlanforderungen, z.B. Fokussierung des Sendesignals in Richtung Füllgut erfüllt. In Fig.4 ist eine Linse zur weiteren Fokussierung des Signals an der Sendeantennenanordnung 20 angebracht.

Ergänzend sei darauf hingewiesen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

### Bezugszeichenliste

- 10: Füllstandradarantennenanordnung
- 20: Sendeantennenanordnung
- 30: Empfangsantennenanordnung
- 40: Gehäuse

## Patentansprüche

1. Füllstandradarantennenanordnung (10) zur Messung eines Füllstandes in einem Behälter, aufweisend:
- eine Sendeantennenanordnung (20) zum Senden eines Sendesignals in Richtung einer Füllgutoberfläche eines in dem Behälter gespeicherten Füllgutes,
- eine Empfangsantennenanordnung (30) zum Empfangen eines an der Füllgutoberfläche reflektierten Sendesignals, und
- ein Gehäuse (40),
wobei die Sendeantennenanordnung (20) und die Empfangsantennenanordnung (30) in dem Gehäuse angeordnet sind,
**dadurch gekennzeichnet, dass** die Sendeantennenanordnung (20) größer als die Empfangsantennenanordnung (30) ist.

2. Füllstandradarantennenanordnung (10) nach Anspruch 1, wobei die Sendeantennenanordnung (20) oder die Empfangsantennenanordnung (30) einen Aperturstrahler aufweisen.

3. Füllstandradarantennenanordnung (10) nach Anspruch 1 oder 2, wobei eine Apertur der Sendeantennenanordnung (20) größer als eine Apertur der Empfangsantennenanordnung (30) ist.

4. Füllstandradarantennenanordnung (10) nach Anspruch 3, wobei eine Wirkfläche der Apertur der Sendeantennenanordnung (20) mehr als doppelt so groß wie eine Wirkfläche der Apertur der Empfangsantennenanordnung (30) ist.

5. Füllstandradarantennenanordnung (10) nach einem der vorhergehenden Ansprüche, wobei die Summe der Aperturflächen der Sendeantennenanordnung (20) und der Empfangsantennenanordnung (30) größer als 50% und vorzugsweise größer als 90% einer Fläche des Gehäuses ist, an dem die Aperturen der Sendeantennenanordnung (20) und der Empfangsantennenanordnung (30) angeordnet sind.

6. Füllstandradarantennenanordnung (10) nach einem der vorhergehenden Ansprüche, wobei die Sendeantennenanordnung (20) eine Hornantenne aufweist.

7. Füllstandradarantennenanordnung (10) nach einem der vorhergehenden Ansprüche, wobei die Empfangsantennenanordnung (30) eine Hornantenne aufweist.

8. Füllstandradarantennenanordnung (10) nach Anspruch 6 oder 7, wobei die Hornantenne eine Linse aufweist.

9. Ein Füllstandradargerät mit einer Füllstandradarantennenanordnung (10) nach einem der vorhergehenden Ansprüche.

10. Ein Behälter mit einem daran angebrachten Füllstandradargerät nach Anspruch 9.

11. Behälter nach Anspruch 10, wobei das Material des Behälters dort, wo das Füllstandradargerät angebracht ist, identisch ist mit einem Material des Gehäuses der Füllstandradarantennenanordnung.

## Claims

1. Level radar antenna assembly (10) for measuring a level in a container, comprising:
- a transmitting antenna assembly (20) for transmitting a transmission signal in the direction of a product surface of a product stored in the container,
- a receiving antenna assembly (30) for receiving a transmission signal reflected at the product surface, and
- a housing (40),
wherein the transmitting antenna assembly (20) and the receiving antenna assembly (30) are arranged in the housing,
**characterized in that**, the transmitting antenna assembly (20) is larger than the receiving antenna assembly (30).

2. Level radar antenna assembly (10) according to claim 1, wherein the transmitting antenna assembly (20) or the receiving antenna assembly (30) comprises an aperture radiator.

3. Level radar antenna assembly (10) according to claim 1 or 2, wherein an aperture of the transmitting antenna assembly (20) is larger than an aperture of the receiving antenna assembly (30).

4. Level radar antenna assembly (10) according to claim 3, wherein an effective area of the aperture of the transmitting antenna assembly (20) is more than twice as large as an effective area of the aperture of the receiving antenna assembly (30).

5. Level radar antenna assembly (10) according to one of the preceding claims, wherein the sum of the aperture areas of the transmitting antenna assembly (20) and the receiving antenna assembly (30) is greater than 50% and preferably greater than 90% of an area of the housing on which the apertures of the transmitting antenna assembly (20) and the receiving antenna assembly (30) are arranged.

6. Level radar antenna assembly (10) according to any one of the preceding claims, wherein the transmitting antenna assembly (20) comprises a horn antenna.

7. Level radar antenna assembly (10) according to any one of the preceding claims, wherein the receiving antenna assembly (30) comprises a horn antenna.

8. Level radar antenna assembly (10) according to claim 6 or 7, wherein the horn antenna comprises a lens.

9. A level radar device with the level radar antenna assembly (10) according to one of the preceding claims.

10. A container with the level radar device attached to it according to claim 9.

11. The container according to claim 10,
wherein the material of the container where the level radar device is mounted is identical to a material of the housing of the level radar antenna assembly.

## Revendications

1. Ensemble antennes radar de niveau de remplissage (10) pour la mesure d'un niveau de remplissage dans un récipient, présentant :
- un ensemble antenne d'émission (20) pour émettre un signal d'émission en direction d'une surface de produit de remplissage d'un produit de remplissage stocké dans le récipient,
- un ensemble antenne de réception (30) pour recevoir un signal d'émission réfléchi par la surface de produit de remplissage, et
- un boîtier (40),
dans lequel l'ensemble antenne d'émission (20) et l'ensemble antenne de réception (30) sont disposés dans le boîtier,
**caractérisé en ce que** l'ensemble antenne d'émission (20) est plus grand que l'ensemble antenne de réception (30).

2. Ensemble antennes radar de niveau de remplissage (10) selon la revendication 1, dans lequel l'ensemble antenne d'émission (20) ou l'ensemble antenne de réception (30) présentent une antenne à ouverture.

3. Ensemble antennes radar de niveau de remplissage (10) selon la revendication 1 ou 2, dans lequel une ouverture de l'ensemble antenne d'émission (20) est plus grande qu'une ouverture de l'ensemble antenne de réception (30).

4. Ensemble antennes radar de niveau de remplissage (10) selon la revendication 3, dans lequel une surface active de l'ouverture de l'ensemble antenne d'émission (20) est plus de deux fois plus grande qu'une surface active de l'ouverture de l'ensemble antenne de réception (30).

5. Ensemble antennes radar de niveau de remplissage (10) selon l'une des revendications précédentes, dans lequel la somme des surfaces d'ouverture de l'ensemble antenne d'émission (20) et de l'ensemble antenne de réception (30) est supérieure à 50 % et de préférence supérieure à 90 % d'une surface du boîtier sur laquelle sont disposées les ouvertures de l'ensemble antenne d'émission (20) et de l'ensemble antenne de réception (30).

6. Ensemble antennes radar de niveau de remplissage (10) selon l'une des revendications précédentes, dans lequel l'ensemble antenne d'émission (20) présente une antenne cornet.

7. Ensemble antennes radar de niveau de remplissage (10) selon l'une des revendications précédentes, dans lequel l'ensemble antenne de réception (30) présente une antenne cornet.

8. Ensemble antennes radar de niveau de remplissage (10) selon la revendication 6 ou 7, dans lequel l'antenne cornet présente une lentille.

9. Dispositif de radar de niveau de remplissage comportant un ensemble antennes radar de niveau de remplissage (10) selon l'une des revendications précédentes.

10. Récipient sur lequel est rapporté un dispositif de radar de niveau de remplissage selon la revendication 9.

11. Récipient selon la revendication 10, dans lequel le matériau du récipient là où le dispositif de radar de niveau de remplissage est monté est identique à un matériau du boîtier de l'ensemble antennes radar de niveau de remplissage.
